# EUROPEAN PATENT APPLICATION

(11) **EP 0 612 601 A1**
(43) Date of publication of application: **31.08.1994**
(21) Application number: 93830067.0
(22) Date of filing: 24.02.1993
(51) Int. Cl.: B29C 45/68

(54) **A toggle-action closure for presses, particularly presses for injection molding plastics materials**

(71) Applicant: OIMA S.p.A., I-31044 Montebelluna Treviso (IT)
(72) Inventor: Soncini, Gino, I-31044 Montebelluna (Treviso) (IT); Dal Pio, Renzo, I-31044 Montebelluna (Treviso) (IT)
(74) Representative: Cantaluppi, Stefano

(57) **Abstract**

In a toggle-action clamp for presses including a plurality of parallel-axis pillars (3b) having a stationary plate (6), moving plate (7), pressure heel (10), and toggle-action mechanism (11) acting between the pressure heel (10) and the moving plate to cause the latter to perform predetermined mold closing and opening strokes, respectively, and apply a predetermined mold closing load, mounted thereon, the pressure heel (10), which locates between the moving plate and a stop heel (17), is guided for sliding movement along the pillars, actuator means (19) are operative between the stop heel (17) and the pressure heel (10) to shift the pressure heel (10) along the pillars toward and away from a working position, and the pressure heel (10) can be locked with respect to the stop heel (17) and the pillars independently of the actuator means.

## Description

This invention relates to a toggle-action clamp for presses of the kind used for injection molding plastics materials, comprising:
at least a pair of pillars having parallel axes and a stationary plate mounted on axial ends thereof;
a moving plate guided along said pillars for sliding movement toward and away from the stationary plate to clamp a mold between said plates;
a pressure heel associated with said pillars on the opposite side from the stationary plate with respect to the moving plate; and
a toggle-action mechanism arranged to act between the pressure heel and the moving plate and cause the latter to perform predetermined mold clamping and releasing strokes, respectively, and apply a predetermined closing load to the mold.

The invention also concerns a press for injection molding plastics materials which incorporates a toggle-action clamp according to the invention.

In the plastics injection molding industry, toggle-action clamps have been known in a range of different designs. Some prior constructions are illustrated in Perucca, "Dizionario di Ingegneria", UTET Publishers, at the entry "Stampaggio".

A first example of a clamp is the so-called direct toggle-action clamp. In that clamp, the toggle-action mechanism is arranged to drive the moving plate toward and away from the stationary plate, as well as to clamp the mold by application of a predetermined mold closing load.

The toggle-action mechanism has a number of well-recognized advantages. Some of these relate to that, for a given rate of advance or the plunger to which the moving plate is connected via a crosshead device, a fast advance rate during the initial portion of the stroke and slow advance rate during the final portion can be obtained for the moving plate. The clamping phase, being a slow one, takes place under a condition of high mold preloading. The release phase likewise takes place at a slow rate, because the mechanism operation is reversed. Accordingly, the moving plate can be applied a large force through the toggle-action mechanism for opening the mould.

This prior approach has, however, some disadvantages. Among these is the fact that the stroke distances travelled by the moving plate are relatively short ones, being usually on the same order of magnitude as the pillar spacing. Thus, with presses which have a limited pillar spacing, and hence a short stroke length of the moving plate, it becomes difficult, if not altogether impossible, to mold pieces which are markedly elongate in a major direction thereof.

A second example of a related clamp is represented by the so-called plunger and toggle-action clamp. In this case, the forward stroke of the moving plate is entirely produced through the use of oil-operated jacks intervening between the pressure heel and the moving plate. The toggle-action mechanism is supported on the moving plate and is only operated to apply a predetermined closing load to the mold by performing a compression member function between the pressure heel and the moving plate. In this second example, the forward stroke of the moving plate can be made significantly longer than that of the first example, so that pieces of considerable length can be molded thereby.

On the other hand, the second-mentioned prior approach has some disadvantages of its own, among which is the fact that the forward movement of the moving plate occurs at a slow rate compared to that to be obtained with direct toggle-action clamps. In addition, a large die-opening force cannot be exerted on the moving plate because this function is served solely by the oil-operated jacks provided for driving the moving plate.

A further example of a clamp for plastics injection molding presses, albeit not of the toggle-action type, is known in the industry by the name of "Hydroblock" clamp. In this clamp, the pressure heel is slidable along the pillars and locates somewhere between the moving plate and a stop heel. Oil-operated jacks are provided between the stop and the pressure heels for shifting the pressure heel toward and away from the stationary plate. Arranged between the pressure heel and the moving plate are additional oil-operated actuators for clamping the moving plate against the stationary plate and applying the closing load to the mold.

With the last-mentioned clamp, pieces of considerable length can be molded, while large forces can be exerted on the moving plate to close the mold. However, it is liable to a number of technical shortcomings, among which are the high oil requirements for the oil-operated actuators and the comparatively slow rate of the moving plate forward and mold-closing stroke.

The underlying problem of this invention is to provide a toggle-action clamp for presses, particularly presses used for injection molding plastics materials, which is designed and constructed to enable pieces of considerable length to be molded, and concurrently the moving plate to be driven forward at a fast rate. In addition, this clamp shall enable application of a high closing load to the mold, as well as application of a large force to the moving plate for opening the mold.

This problem is solved according to the invention by a toggle-action clamp as indicated in the preamble being characterized in that:
a) the pressure heel is guided for sliding movement along said pillars and positioned between the moving plate and a stop heel;
b) actuator means are arranged to be operative between the stop and the pressure heels to shift the pressure heel along said pillars toward and away from a working position where it lies close to the stationary plate; and
c) stop means are arranged to lock said pressure heel relatively to said stop heel and said pillars independently of said actuator means when the pressure heel occupies said working position.

In this way, the actuator means only are to drive the pressure heel back and forth, which makes the molding of markedly elongate pieces feasible.

Similarly, the toggle-action mechanism enables a high closing load to be applied to the mold and a large force to the moving plate for opening the mold. Further, that mechanism adds, to the overall stroke length of the moving plate, a limited but fast segment of movement of the moving plate toward and away from the stationary plate. Also, the moving plate can be driven toward and away the stationary plate by the combined actions of the actuator means and the toggle-action mechanism to provide a longer and faster overall stroke against a limited delivery of pressurized oil to the respective jacks.

The invention will now be described, as applied to an injection molding press, with reference to the accompanying exemplary and non-limitative drawings, in which:

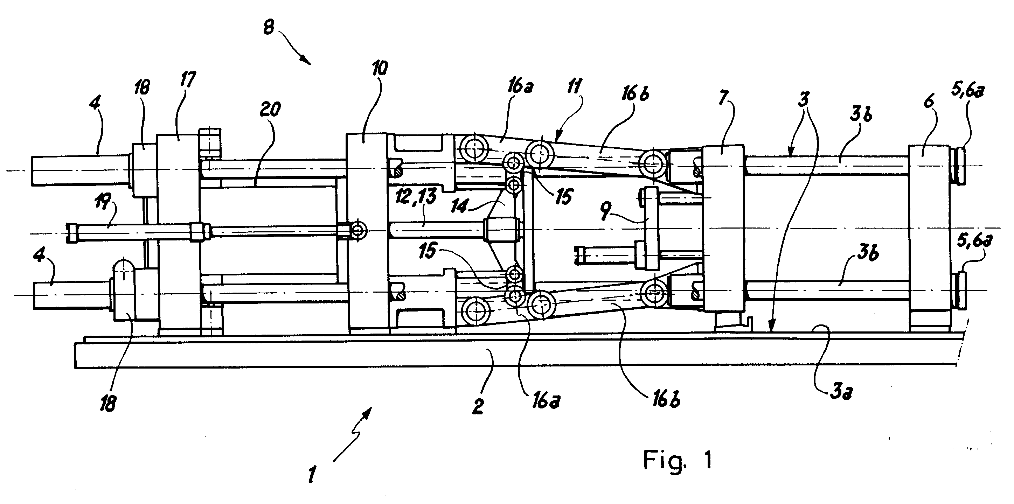

Figure 1 is a side elevation view of a press for injection molding plastics materials which incorporates a toggle-action clamp according to the invention, showing it in a working position;
Figure 2 is an elevation view showing, partly in longitudinal section, the press in a fully released position; and

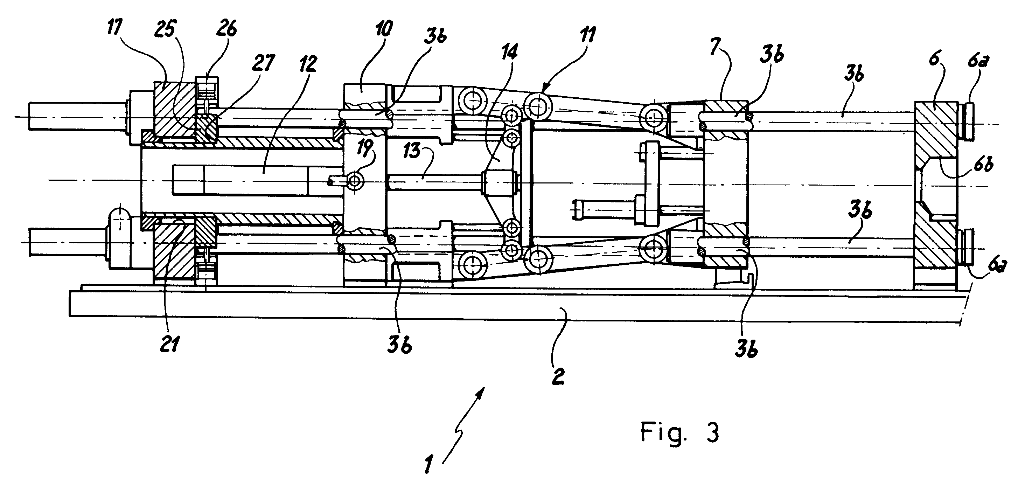

Figure 3 is an elevation view showing, partly in longitudinal section, the press in the same working position as in Figure 1.

In the drawing figures, generally shown at 1 is a press for injection molding plastics materials, of which a machine bed 2 and a clamp, generally indicated at 8, are depicted.

The press 1 includes straight horizontal guiding means 3 which comprise a guide 3a formed on the bed 2 and two pillar pairs 3b extending parallel to one another and to the guide 3a. The axially opposed end regions of the pillars 3b are designated 4 and 5, respectively.

Mounted on the end 5 by means of end retainers 6a is a stationary plate 6 which is through-penetrated by an injection conduit 6b.

Associated with the plate 6 is a moving plate 7 which can slide along the guide means 3. The stationary plate 6 and moving plate 7 carry respective mold parts (die and punch) not shown in the drawings. Conventionally associated with the moving plate 7 is a stripper device 9 for shaking the molding out of the mold and discharging it.

A pressure heel 10 is mounted slidably on the guiding means 3, on the opposite side of the moving plate 7 relatively to the stationary plate 6, so that the moving plate 7 is intermediate to the stationary plate and the pressure heel.

Located between the pressure heel 10 and the moving plate 7 is a toggle-action mechanism, generally shown at 11, which is operative to drive the moving plate 7 through a predetermined stroke toward and away from the stationary plate 6.

The toggle-action mechanism comprises a hydraulic jack having a cylinder 12 attached to the pressure heel 10 and a piston rod 13 fitted with a crosshead 14 at its free end. This crosshead 14 is connected, in turn, as by connecting rods 15, to respective connecting rod pairs 16a,b pivoted to one another as well as to the pressure heel and the moving plate, respectively. The specific design of such connecting rods, and their connection to the crosshead, is well-known in the technical field of presses for injection molding plastics materials equipped with a toggle-action clamp.

Also associated with the guiding means 3 is a stop heel 17 which can be adjusted in position and locked along the end sections 4 of the aforesaid pillars by means of sliding movement adjusters 18 of the kind normally used in conventional clamps to lock the pressure heel adjustably to the pillars.

Provided between the stop heel 17 and the pressure heel 10 are actuator means which consist of a pair of hydraulic jacks 19 arranged to shift the pressure heel 10 toward and away from the stationary plate 6.

Associated with the pressure heel 10 and the stop heel 17 is a tubular spacer 20 which extends parallel to the guiding means 3 at the location of an opening 21 formed axially through the stop heel 17. The opposite ends of the spacer 20 are denoted by 20a and 20b, respectively.

The end 20b is attached to the pressure heel 10 by a flange connection 28 whereby the spacer can be locked to the surface of the pressure heel 10 facing the stop heel.

The end 20a of the spacer is adapted to be releasably locked to the stop heel 17 in both axial directions. Axial locking means are provided for the purpose which include, for the constraint intended to limit the axial movement of the pressure heel 10 away from the stop heel 17, a ring 22 having a shoulder 23 adapted to abut against a corresponding shoulder 24 on the stop heel. On the other hand, for the constraint limiting the axial movement of the pressure heel 10 toward the stop heel 17, a hitching device is provided which comprises two half-jaws 25 being guided along a radial direction on the pressure heel 10 but fast for travelling therewith, which are adapted to be clamped tightly around the spacer 20 by the action of respective hydraulic jacks 26, at a location where a radial shoulder surface 27 of the spacer abuts axially against the jaws 25.

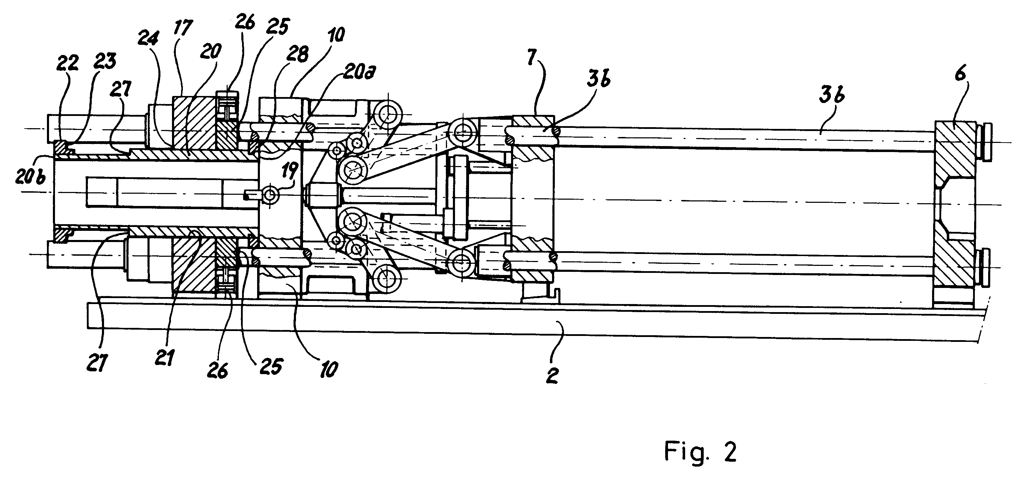

For operating the press 1 in accordance with a preferred method, which also forms the subject-matter of this invention, assuming a fully released starting position as shown in Figure 2, the jacks 19 are actuated to drive the pressure heel 10 along the guiding means 3 toward the stationary plate 6.

Simultaneously or with a slight lag on said phase, oil is delivered under a pressure to the hydraulic jack 12 of the toggle-action mechanism 11 such that the stroke from it can be initiated which tends to bring the moving plate 7 toward the stationary plate 6.

However, the concurrent operation of the jacks 19 and the jack 12 for the toggle-action mechanism is arranged such that the latter will only complete its stroke after the following phases are completed.

First, the forward movement should be completed of the pressure heel toward the working condition in which the shoulder 23 on the ring 22 abuts against the corresponding shoulder 24 on the stop heel 17. In this condition, the two half-jaws 25 of the hitching device can be tightened around the spacer 20 in a position where the radial shoulder surface 27 of the spacer abuts axially against the jaws 25.

Then, the jacks 26 are operated to lock the spacer 20 axially with respect to the stop heel 17 through said jaws.

Once these operations have been carried out, the stroke movement of the jack 12 for the toggle-action mechanism 11 can be brought to an end, by clamping the mold between the moving 7 and stationary 6 plates under a selected preload. In this condition, the spacer 20 will be acting as a compression member between the pressure heel 10 and the stop heel 17 to transfer, over to the stop heel, the thrust from the toggle-action mechanism 11 to the pressure heel.

Thus, the injection of plastics material into the mold can be performed conventionally.

On completion of the injection step, the jack 12 of the toggle-action mechanism is first operated in reverse to initially remove the mold closing load and then open the mold by driving the moving plate 7 away from the stationary plate 6 through the toggle-action mechanism 11. In this action the spacer 20 is used as a tension member to transfer, over to the stop heel, the pull -- which may occasionally attain high values -- exerted by the toggle-action mechanism 11 on the pressure heel 10 to open the mold.

In the course of this step, moreover, the hitching device is operated to disengage the two half-jaws 25 from the spacer 20 to again allow it to slide freely through the opening 21 in the stop heel 17. Accordingly, by operating the jacks 19 in reverse, the pressure heel can be returned to the stop heel and the molding removed from the mold.

Thus, the invention achieves its objects and affords a number of advantages over the prior art.

First, it provides for considerably fast mold opening and closing movements, while keeping the pressurized oil requirements for the hydraulic jacks low. This reflects in increased press throughput and improved press efficiency.

Additionally, a large bias force can be exerted during the mold opening through the toggle-action mechanism provided. This feature is useful to counteract the proneness of the two mold parts to stick together, as is specially manifest on injection molding elongate pieces in the direction of the pillar axes.

This construction also allow a clamping mechanism to be provided using the same parts as are normally employed in the construction of conventional toggle-action clamps, by suitably lengthening the pillars and adding the stop heel, jack actuators, spacer, and locking means associated therewith.

## Claims

1. A toggle-action clamp for presses used for injection molding plastics materials, comprising:
at least a pair of pillars (3b) having parallel axes and a stationary plate (6) mounted on axial ends thereof;
a moving plate (7) guided along said pillars for sliding movement toward and away from the stationary plate (6) to clamp a mold between said plates;
a pressure heel (10) associated with said pillars on the opposite side from the stationary plate with respect to the moving plate; and
a toggle-action mechanism (11) arranged to act between the pressure heel and the moving plate and cause the latter to perform predetermined mold clamping and releasing strokes, respectively, and apply a predetermined closing load to the mold, characterized in that:
a) the pressure heel (10) is guided for sliding movement along said pillars (3b) and positioned between the moving plate (7) and a stop heel (17);
b) actuator means (19) are arranged to be operative between the stop (17) and the pressure (10) heels to shift the pressure heel along said pillars toward and away from a working position where it lies close to the stationary plate (6); and
c) stop means (20-27) are arranged to lock said pressure heel relatively to said stop heel and said pillars independently of said actuator means (19) when the pressure heel (10) occupies said working position.

2. A toggle-action clamp according to Claim 1, wherein said stop means comprise at least one spacer (20) effective to act as a compression member between the stop heel (17) and the pressure heel (10) with the pressure heel in said working position, and the moving plate (7) is driven by the toggle-action mechanism (11) to close the mold.

3. A toggle-action clamp according to Claim 2, wherein said spacer (20) is effective to act as a tension member between the stop heel (17) and the pressure heel (10) with the pressure heel (10) in said working position, and the moving plate is driven by the toggle-action mechanism (11) to open the mold.

4. A toggle-action clamp according to any of the preceding claims, wherein said spacer (20) is attached with an axial end to the pressure heel (10) and is attachable with the opposite end to the stop heel (17) through locking means (22-27).

5. A toggle-action clamp according to Claim 4, wherein said locking means comprise a hitching device (25-27) arranged to act reversibly between the spacer (20) and the stop heel (17) to prevent the pressure heel (10) from being shifted toward the stop heel (17), with the pressure heel (10) occupying said working position, so that said spacer (20) forms a compression member between the stop heel (17) and the pressure heel (10).

6. A toggle-action clamp according to either Claim 4 or Claim 5, wherein said locking means comprise respective shoulders (23,24) acting between the stop heel (17) and the pressure heel (10) to prevent the pressure heel (10) from being shifted away from the stop heel (17), with the pressure heel (10) occupying said working position, so that said spacer (20) forms a tension member between the stop heel (17) and the pressure heel (10).

7. A toggle-action clamp according to any of Claims 4 to 6, wherein said hitching device comprises two half-jaws (25) adapted to travel with the pressure heel (10) and to be tightened around the spacer (20) at a location where the radial shoulder surface (27) of the spacer (20) abuts axially against the jaws.

8. A toggle-action clamp according to one or more of the preceding claims, wherein said stop heel (17) is formed with an opening (21) through which said spacer (20) is led.

9. A toggle-action clamp according to one or more of the preceding claims, wherein said stop heel (17) can be shifted adjustably along said pillars.

10. A press for injection molding plastics materials, characterized in that it includes a toggle-action clamp as claimed in any of the preceding claims.

11. A method of operating a press for injection molding plastics materials, wherein, preparatory to injection into a mold, a moving plate (7) is first caused to perform a predetermined clamping stroke toward a stationary plate (6) to clamp a mold between said plates, whereafter the mold is applied a predetermined mold closing load, all this through a toggle-action mechanism (11) acting between the pressure heel (10) and the moving plate, and after the injection, the predetermined mold closing load is removed and the moving plate caused to perform a predetermined release stroke toward the pressure heel (10) through the toggle-action mechanism (11),
characterized in that it further comprises the steps of:
moving the pressure heel (10) toward the stationary plate (6) through actuator means operative between the pressure heel (10) and a stop heel located on the opposite side from the moving plate with respect to the pressure heel (10) to bring it to a working position close to the stationary plate (6);
locking the pressure heel (10) relatively to the stop heel in the working position by means of a spacer (20) interposed as a compression member to the stop heel and the pressure heel (10);
clamping the moving plate to the stationary plate (6) through the toggle-action mechanism (11);
applying the predetermined mold closing load to the mold through the toggle-action mechanism (11);
injecting plastics material into the mold;
removing the predetermined mold closing load applied to the mold by the toggle-action mechanism (11);
releasing the moving plate from the stationary plate (6) by means of the toggle-action mechanism (11) and using the spacer (20) as a tension member; and
returning the pressure heel (10) toward the stop heel through the actuator means.

12. A method according to Claim 10, characterized in that the movement phases of the moving plate toward and away from the stationary plate (6) take place under the concurrent actions of the actuator means and the toggle-action mechanism (11).
